# EUROPEAN PATENT APPLICATION

(11) **EP 1 617 343 A1**
(43) Date of publication of application: **18.01.2006**
(21) Application number: 05104640.7
(22) Date of filing: 31.05.2005
(51) Int. Cl.: G06F 17/30

(54) **A Method and system to load information in a general purpose data warehouse database**

(30) Priority: 15.07.2004 EP 04368051
(71) Applicant: IBM Corporation, Armonk, NY 10504 (US)
(72) Inventor: Crea, Mariano, 89063, Melito di Porto Salvo (IT)
(74) Representative: Therias, Philippe

(57) **Abstract**

A method and a system for loading information from a production database into a general purpose DW database comprising at least one table for each type of object defined in its schema, said method first consisting in collecting information from the production database and for each object to be checked identified in the collected information, building an indexed temporary database having as primary keys, the primary keys of the object to be checked. The checking for the existence of the object performed before any insertion or modification of an existing object is done in the temporary database instead of the general purpose DW database.

This highly improves performances in the loading operations executed during the DW ETL (Extract, Transform and Load) procedures. If the temporary table is transformed from vertical to horizontal the step for executing the checking of existence are even reduced and the performance of ETL even more improved.

## Description

### Field of the Invention

The present invention relates generally to general purpose Data Warehouse (DW) databases; more particularly the invention relates to improving performance when querying information in this type of databases.

### Background of the Invention

Data Warehouse is data organization with a corporate-wide scope of use for decision support and informational applications. DW databases are the business oriented source of information for decision making and information application in a company. The applications operating in a company generate operational data which are stored in production databases. The structure of a production database is adapted to the transaction format of the applications and adapted to perform updates. The production databases are usually accessed and maintained by the same database specialists.

The DW database have been created to allow queries and more generally analytical processing of information data for business purpose without impacting the production databases. The DW databases contain informational data transformed from the operational data which are extracted from the production databases. The DW database informational data may be business data, transactions, events and computed statistics performed on operational data. The DW databases contain a wide variety of data that present a coherent picture of business conditions at a single point in time. In the DW database, data is integrated, consolidated, secure and cleaned. These databases done for storing a huge amount of information are relational databases modeled by defining a schema which is the logical organization of data. The schema can be compared to a container with fields, tables, indexes, constraints, sequences etc...

The schema of a DW database storing information data coming from the production database of a unique application is similar to the schema of the production database but with the addition of time and operation information. As new data are added, new tables are created in the schema. In the DW tables each information is associated to a key: these keys are those which initially identified the application data in the production database. This allows using hashing code based algorithm or any other key based searching algorithm to perform the operation of update in the DW database. These key based search facilitates and improve performances in searching in the DW database during the operations of uploading of information from the production database to the DW database.

The general purpose Data Warehouse databases are specific DW databases able to archive information from more than one application. The general purpose DW database schema must be generic enough to apply to any type of applications. For instance, the schema of a general purpose DW may comprise simple objects such as components, attributes, relationship between components and measurements. As a general purpose DW database stores in a same structure information data for more than one application, the information in cannot be identified in the general purpose DW database by the initial keys used in the production database. The keys cannot be used and the information is uniquely identified by a combination of the values of the objects. The search in the database tables which are huge is thus very slow.

As a general purpose DW database stores in a same structure information data for more than one application the schema contains a limited number of object type. For each object one or more table is defined in the general purpose DW database. As new information data or a new application is added, no new table, table column, index can be created, only new rows are inserted in the existing tables. When information of a production database is loaded in the general-purpose DW database, it is necessary to verify that this information is not already stored in the central database. So, for all production information, during the data loading procedure, a search must be performed on several joined tables. The search consists in finding a combination of object values and must be executed in joined database tables. These tables being very huge, the search may be very slow.

There is a need to improve performance in general purpose DW database during the execution of the procedure of loading of information, because a search of a combination of object values is to be performed in any case on joined tables.

### Summary of the Invention

It is therefore a main object of the invention to improve performance while loading information in a general purpose data warehouse database.

This object is achieved with a method of claim 1 for loading information from a production database into a general purpose DW database comprising at least one table for each type of object defined in its schema, said method comprising the steps of:
- collecting information to be loaded from the production database;
- identifying in the collected information one object to be checked having at least one object table and its corresponding metadata in the general purpose DW database;
- selecting the rows in the at least one table of the object to be checked of the general purpose DW database containing the metadata of the object to be checked;
- reading the primary keys of the selected rows;
- selecting in the at least one associated object table of the general purpose DW database tables, the rows containing the primary keys as the foreign keys;
- creating an indexed temporary table wherein each row comprises pairs of data, the first pair being (primary key, metadata value) read in the selected at least one object table, the other pairs (associated object metadata, metadata value) read in selected at least one associated object table;
- checking in the temporary indexed table if the collected information already exists and reading the primary key;
- performing the loading of information in the general purpose DW database tables according to the result of the checking step and using the primary key in the general purpose DW tables.

The object of the invention is also achieved with the method of claim 2 which is the method of claim 1 further comprising:
if the checking of the temporary indexed table is negative and the loading is for insertion, creating a new primary key and new rows using it in the general purpose DW database at least one table of the checked object and the associated objects; and,
if the checking of the temporary indexed table is positive and the loading is for modification, searching the rows and modifying them in the general purpose DW database at least one table of the checked object and the associated objects using the primary key of the temporary table.

The object of the invention is also achieved with the method of claim 1 which is the method of anyone of claims 1 to 2 further comprising, before performing the checking step:
transforming the temporary table into one second temporary table wherein each row includes the first pair of data, (primary key, metadata value), of the temporary table followed by the successive associated object metadata values found in the rows of the temporary table having the same primary key; and,
replacing the temporary table by the second temporary table.

The object of the invention is also achieved with the method of claim 1 or 3 further comprising:
removing the temporary table.

The object of the invention is also achieved with the method of claim 5 which is the method of anyone of claim 1 to 4 wherein the object to be checked is a component and the associated objects are component attributes.

The object of the invention is also achieved with the method of claim 6 which is the method of anyone of claim 1 to 4 wherein the object to be checked is an attribute and the associated objects are components.

The object of the invention is also achieved with the method of claim 7 which is the method of anyone of claim 1 to 4 wherein the object to be checked is a relation and the associated objects are components and attributes associated to the components.

The object of the invention is also achieved with the method of claim 8 which is the method of anyone of claim 1 to 4 wherein the object to be checked is a measurement and the associated objects are component and attributes associated to components.

The object of the invention is also achieved with the method of claim 9 which is the method of anyone of claims 1 to 8 further comprising:
identifying if one other object is to be checked in the collected information and its corresponding metadata in the general purpose DW database, and, if one other object is found, repeating the steps of the method, starting from the first selecting step, for this other object; and,
repeating the previous step for all the objects to be checked identified in the collected information.

The object of the invention is also achieved with the computer program product of claim 10 comprising programming code instructions for executing the steps of the method according to anyone of claims 1 to 9 when said program is executed on a computer.

The object of the invention is also achieved with the data processing system of claim 11 comprising means adapted for carrying out the method according to anyone of claims 1 to 9.

The main advantage of the method is the performance improvement. The constraint of the method is the use of more storage at execution time for the temporary tables, however, this need is only for a limited time because at the end of the insert/modify operations the temporary tables are removed.

### Brief Description of the Drawings

FIG. 1 illustrates the environment of a DW database;
FIG. 2 illustrates how data is stored in a production database;
Fig. 3 illustrates a schema of a general purpose DW database;
FIG. 4 illustrates how data is stored in a general purpose DW database, using the production database content of Fig. 2;
Fig. 5 is one example of a single type of information about inventors and inventions collected from a production database;
Fig. 6 illustrates a vertical first indexed temporary table according to the preferred embodiment;
Fig. 7 is the flowchart of the method for transforming a first vertical temporary table into a second horizontal temporary table;
Fig. 8 illustrates a horizontal second indexed temporary table according to the preferred embodiment.

### Detailed Description of the preferred embodiment

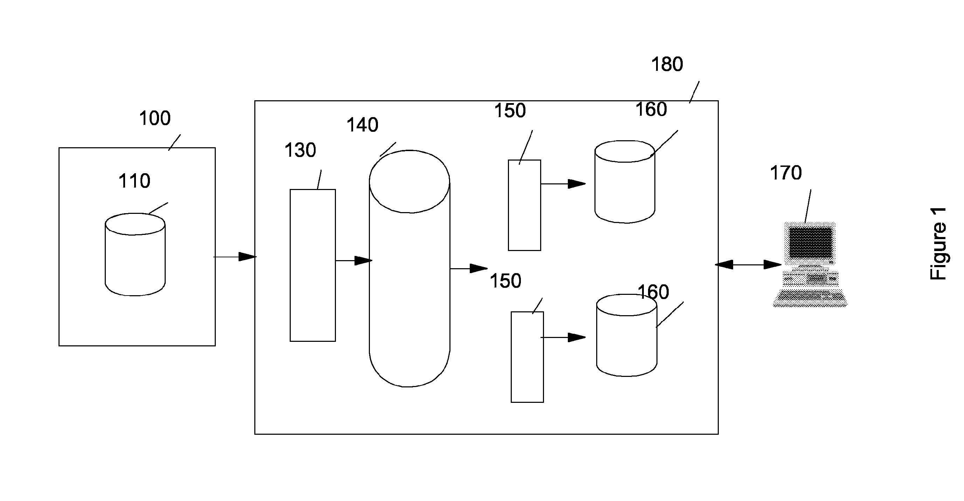

Fig. 1 illustrates the DW database environment. The production databases (110) are taken as inputs in the process of building a DW database. The production databases are the log of transactions executed in the application environment (100). The DW database environment (180) consists in a module (130) for selecting data from the production database and fill the Central DW database (140). This operation (130) more particularly consists in inserting new information or modifying the information already stored in the database. The DW ETL (Extract, Transform and Load) procedure reads the data from the production database data, verifies the data, makes the data conform to the schema of the DW database and places the data into the DW database.

In the real DW database environment, the user performing analytical processing from a workstation (170) of information data stored in DW database, does not directly access the so called 'Central DW database' (140) but rather access Data Marts databases (160). Data Marts databases may have similar schema as the Central DW database only in the case of DW database dedicated to one application. The schema of the Data Marts are different from the schema of the Central DW database when it is a general purpose DW database. If the Central DW database is used at the level of the enterprise, the Data Marts databases are used on a business division or department level. A Data Mart database only contains the required subject specific data for local analysis. For filling Data Mart databases, ETL procedures (150) are also used, they Extract, Transform and Load specific data from the Central DW database towards specific Data Mart databases.

The ETL procedures (130, 150) are generally based on a query language such as SQL (Structured Query Language) which is the standard language used to communicate with a relational database. The ETL are developed by the database designers and specifically according to the structure of the production database (110) and the schema of the Central DW database (140).

A general purpose DW environment has the same elements as described above except that there may be more than one application environment (100) and production database (110). The object of a general purpose DW database environment is collect information for more than one application. Symmetrically, analytical processing is performed from workstations (170) performing business purpose interrogations for the different applications.

The preferred embodiment describes an improved ETL procedure (130) for performing loading information from the production database into the Central DW database which is the general purpose database. The loading of information maybe insertion of information or modification of information.

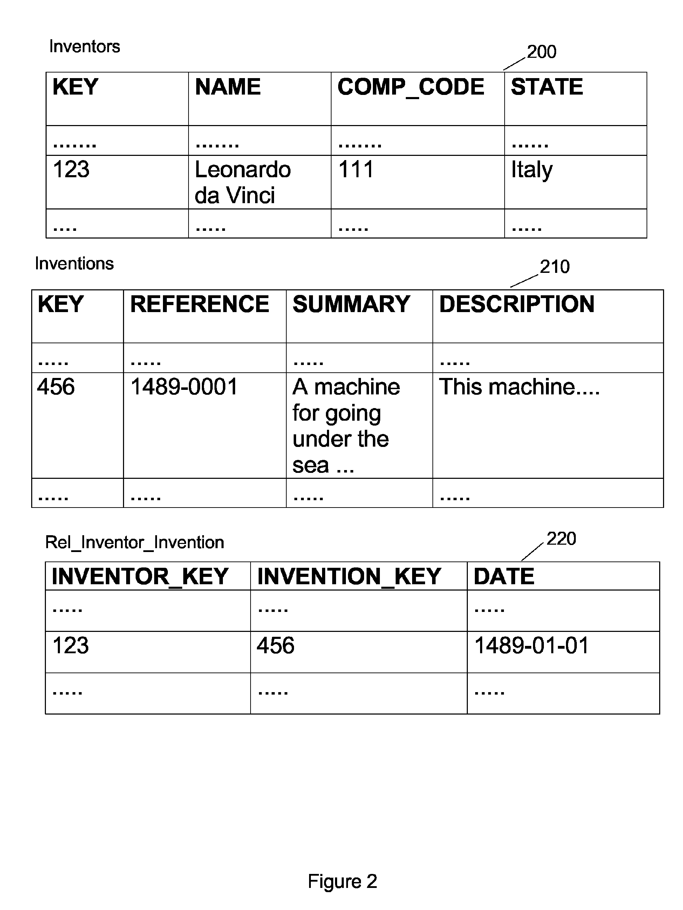

FIG. 2 illustrates how data is stored in a production database. The example illustrated in Fig. 2 is an invention database. The invention processing application collects two kinds of data inventor data and invention data. The corresponding tables in the production database which is a relational database are three: the 'Inventors' table (200), the 'Inventions' table (210) and the 'ReI_ Inventor_Invention' table (220). This latter table stores relations between inventors and inventions. The Inventors table contains all the information concerning the inventors (name, company code,state etc..), one row per inventor. The Inventions table contains all the information concerning the inventions (a reference number of the invention, a summary, the full description). Each row of the Inventors and Inventions tables is identified by a key. The ReI_Inventor_Invention relation table use the keys to define the relation and the date when the invention was entered in the production database.

The schema of a DW database dedicated to one production database is similar to the schema of the production database. In the DW database, the operations of insertion, modification and deletion are all possible. However, the operation of deletion in a DW database is done as a modification as explained hereunder. Generally a DW database tables may be done in two alternatives way. The first type of DW database has tables built from the tables of the production database to which some columns for start-date and end-date temporal attributes are added. The second type of DW database comprises tables created by adding to the production database tables two columns for the date and transaction-type attributes. The key used to retrieve the information in the first type of DW database will be Primary-Key/Start-Date. The key used to retrieve the information in the second type of DW database will be Primary-Key/Date/Operation-Type. When an information is inserted in the first type of DW database, a new row is created with End-Date set at a conventional void value. When an information is modified in the first type of DW database, the End-Date is updated with the current date and a new row is created with the current date, the End-Date being set to a conventional void value. As per the second type of DW database, an information is inserted by creating a new row with the current date and an undefined type of operation identifying a new information which will be created. The same information is modified in the second type of DW database by updating the new type of operation. The information in the two types of DW databases can be deleted if we modify the dates. To delete information in the first type of DW database, the new row which was created with the current date, the End-Date being set to a conventional void value, is modified by changing the End-Date being set to the current date. To delete information in the second type of DW database, a new row is inserted with current date and Operation-Type which identifies the information deleted.

The schema of the DW databases dedicated to one application and thus, one production database, does not apply to the general purpose DW database which is oriented to collection of information from any application and thus from any production database. Also, in the general purpose DW database, the information are inserted, modified and deleted by modification of existing row as in the DW databases dedicated to one application. Consequently the loading of information that is studied for central general purpose DW database in the rest of the document will consist only in insertion or modification of the tables.

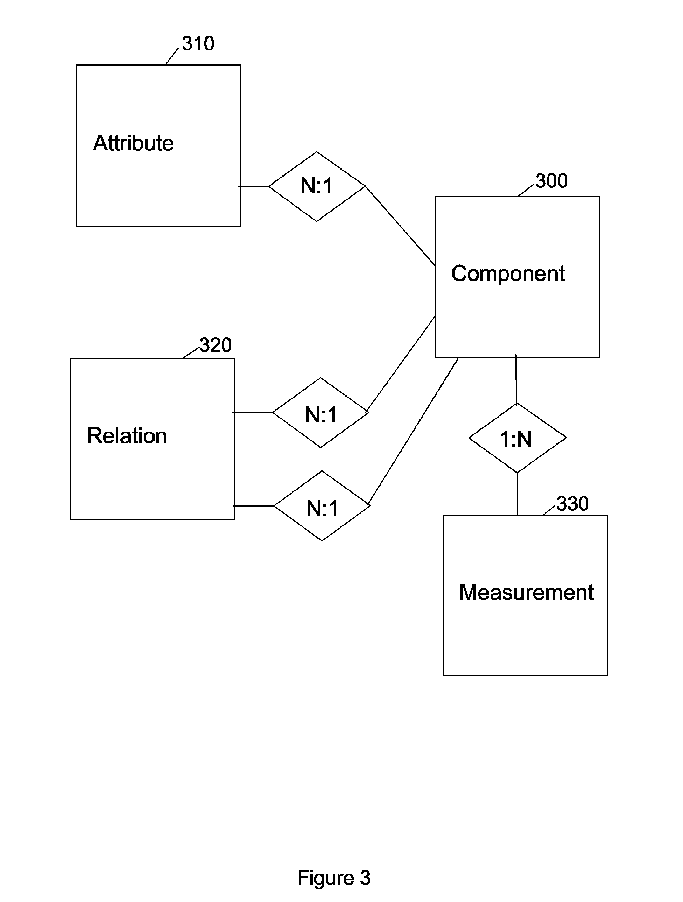

Fig. 3 illustrates a schema of a general purpose DW database which is the Central DW database in the real environment as described in reference to Fig. 1.

The information stored in the general purpose DW database must be structured in a generic way as applying to more than one applications. The schema may include the following objects:
o Components (300)
o Attributes of Component (310)
o Relations between Components (320)
o Measurements of Components (330)

The components are defined from the production databases as the main data to be measured. In the example of Fig. 2 they are two components Inventor and Invention. The attributes are qualifying the components. To one component is associated 1 to N attributes. The relations between components associate, in the same example from one (up to N) inventor to one (up to N) invention; these relations may be found in the production database. The measurements performed of the components may be created in the general purpose DW database only, for instance, one may be the total of inventions per inventor. The measurement computation may be done when loading the general purpose DW database that is during the execution of the ETL procedure.

Each object is usually modeled with at least one table in the general-purpose data warehouse. Because of their nature, these tables are very huge. The general-purpose DW database schema cannot be modified. So, tables, table columns and indexes cannot be added, cannot be dropped and cannot be modified. The information data stored in a general purpose DW database is uniquely identified by a combination of the values of the objects: components, attributes, relations and measurements.

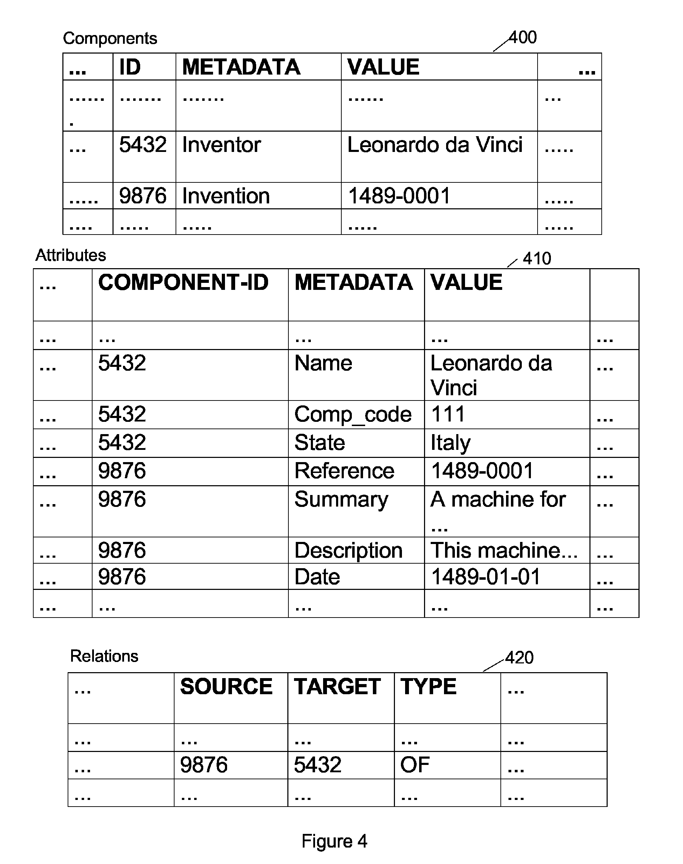

Starting from a production database such as the one illustrated in Fig. 2, Fig. 4 illustrates how data is stored in a general purpose DW database , the Central DW database, using the production database content of Fig. 2.

In DW databases and this is the case also for general purpose DW database, the data read in a production database are split and qualified as 'metadata'. A metadata is a name given to a data and is characterized by its value. One or more metadata can be used as the content of any object of the general purpose DW database. For instance, in reference to the component table (400) in Fig. 4, the component having the id 5432 has a metadata which is the Name in the production database and a value 'Leonardo da Vinci'. In this table of components, the component having the id 9876 has the metadata Invention with a value which is the Reference in the production database.

As the component table applies to more than one application, one metadata, not represented in Fig. 4, of the component table may be 'Application' and the value may be 'patent'. A row of the component table is identified by the component-id and the list of couples (metadata, value) such as (Inventor, Leonardo da vinci), (Appl, patent).

The attributes are stored in the Attribute table (410). One attribute is associated to one component identified by the component-id. In the Attribute table of Fig. 4 there are 4 attributes associated to the component metadata Inventor having the id 5432 and four attributes associated to the component metadata Invention having the id 9876. The component table contains components belonging to any application and this is also the case in the attribute table where the attribute are those of components belonging to any application.

In the relation table (420) one row stores the relation invention 9876 belongs to inventor 5432 the relation being of type 'OF' for 'belonging to'.

'9876', '5432' in the example are the so called 'foreign keys' which are a kind of indirect keys. The foreign keys are primary keys in the component table and foreign keys in the joined attribute and relation tables of the general purpose DW database for its referential security.

A DW database dedicated to one application has not the same characteristics than a general DW database as for its evolution. When we create a data warehouse for an application, we create a new schema and the tables with the metadata information as for a general purpose DW database. Bit, after the data warehouse has been built, when a new type of information is imported into the dedicated DW database, we create a new table (with index and other database object) if the new information is a table into the production database; otherwise we modify an existing table into the dedicated DW database, we add the column into a table existent in the schema of the data warehouse, if the new information is a simple field related to this table.

This is not possible in the general purpose DW database. When we build a new data warehouse for an application in a general purpose DW database, we insert new rows in the tables of the schema of the general purpose DW database. So, after the general-purpose DW database has been built, when a new type of information is imported into the general-purpose DW database, we insert the rows related to the new information.

The method of the preferred embodiment is used when loading information data from data read in a production database into a general purpose DW database. The loading of information may be for insertion of new values (for instance, a new measure of a component), for existing values to be modified (for instance, an attribute change on the time) or for a modification of a metadata (for instance, a relation is no more valid). Generally, in the ETL procedure, for all production information, a query must be performed on the component table in join with the attribute table (as many as the component attributes that constitutes the information) and in join with the relation table (as many as the relations between the component).

For instance, in the following query, where we check the existence of one component having two attributes for given values on the joined component and attribute tables, we read once the entire component table and twice the entire attribute table and the production database P. The time computed for loading 1.000 entries from the production database into the general purpose DW database is of 1 hour. This figure needs to be improved as generally the production databases are huge and the loading is rather to be done on multiples of thousands of entries:
Select 1 from
component c, attribute A1, attribute A2, production P
Where
C.id = A1.COMPONENT_ID and
C.id = A2.COMPONENT_ID and
A1.METADATA = 'Name' and
A1.VALUE = P.Name_Inventor and
A2.METADATA = 'Comp_code' and
A2.VALUE = P.Comp_code_Inventor and
C.APPL = 'patent' and
C.METADATA = 'Inventor' and
C.VALUE = P.Comp_Code_Inventor

The method of the preferred embodiment described hereunder is to insert/modify of a component and its attributes in the general purpose DW database. The same method applies to insert/modify of relations and measurements. The method consists in building an indexed temporary table and perform the query on the temporary table instead of the general purpose DW database component and attribute tables. The steps to perform one loading operation of the production database are as follows:
[1] Collect information from the production database;
[2] Create a vertical indexed temporary table;
[3] Create a horizontal indexed temporary table;
[4] Perform the existence queries on the temporary table and insert the information in the general purpose DW database tables if the information has not been found or modify existing information if the information already exists;
[5] Drop the temporary table.

The existence queries written in SQL language are shrunk when one use the horizontal temporary table instead of the vertical table. In the following, on the same example is taken than the one taken with the existence query SQL language of the prior art (refer above in the document). The first existence query id for use with a vertical temporary table and the second example is for use with a horizontal temporary table as described above in the document.
SQL language with vertical temporary table:
Select 1 from
vindtemp T1, vindtemp T2, production P
Where
T1.COMPONENT_ID = T2.COMPONENT_ID and
T1. ATT_METADATA = 'Name' and
T1.ATT_VALUE = P.Name_Inventor and
T2.ATT_METADATA = 'Comp_code' and
T2.ATT_VALUE = P.Comp_Code_Inventor and
T1.ATT_APPL = 'patent' and
T1.COMP_METADATA = 'Inventor' and
T.COMP_VALUE = P.Comp_Code_Inventor
SQL language with horizontal temporary table:
Select 1 from
oindtemp T, production P
Where
T.NAME = P.Name_Inventor and
T.COMP_CODE = P.Comp_Code_Inventor and
T.COMP_VALUE = P.Comp_Code_Inventor

The number of steps is reduced with the second select query. In the same computing enviroment, for the loading of 1.000 entries from production database into the general purpose DW database, without the use of the indexed temporary table, the time is of 1 hour; for the loading of 56.000 entries from production database into the general purpose DW database, with the use of the indexed vertical temporary table, the time is of 3 hour; for the loading of 56.000 entries from production database into the general purpose DW database, with the use of the indexed horizontal temporary table, the time is of 1 hour.

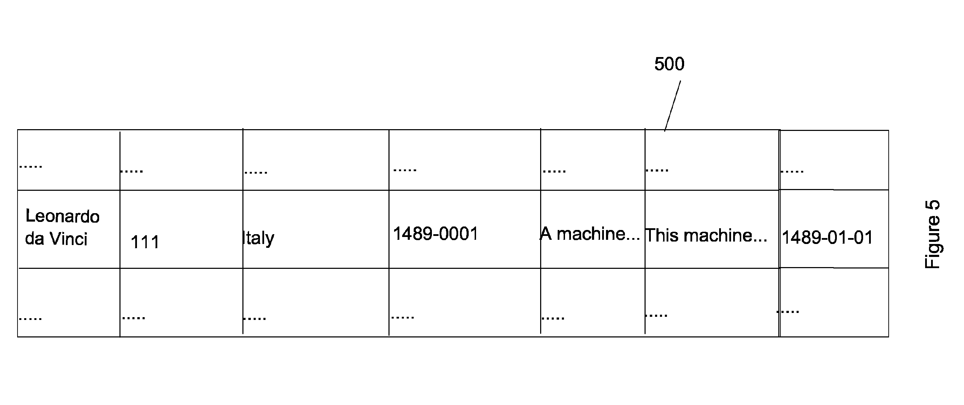

The steps are described in detail hereunder:
[1] Collect information from the production database.
   It is not relevant to have too many queries from production database, but it is fundamental to have all the information. Referring to the example above, we could have 3 queries (Inventors, Inventions, Rel_Inventor_Invention), or just one for inventors and their inventions to obtain the amount of information as illustrated in Fig. 5.
   Fig. 5 is one example of a single type of information about inventors and inventions collected from the production database for which the tables have been illustrated sooner in the document in reference to Fig. 2. A collect table (500) is built gathering all the information read in the three tables : Inventors, Inventions, ReI_Inventor_Invention. Each row of the collect table contains all the information necessary to perform the insertion in component and attribute tables of the general purpose DW database. A so called 'loading operation' performed by one ETL operation consists in reading all the entries of the collect table.
[2] Create a vertical indexed temporary table which contains the data of component and of one attribute for each row. The structure of this table is dependent on the type of data warehouse, and contains either values or metadata. Each row is identified by the component and by the metadata of attribute and for these columns the indexes are created. This table is "vertical", one row for each attribute of component.
   As an example, for checking the existence of a general purpose DW database component, the structure of the vertical temporary is the following:
   Component id - Component Value - Attribute Type - Attribute Value.

   The steps to create the "vertical" temporary table with the information of database filtered by the metadata, are the described hereunder in more details:
   1. Given the information of the object to be checked (e.g. Component), take the corresponding tables of the central database.
   2. Take the tables associated to other objects related to the unique identification of the object we are checking (e.g. Attribute).
   3. Given an information type to be checked (e.g. inventions), take the corresponding metadata (e.g. Invention).
   4. Select the data in the tables of object we are checking, filtering by the metadata. Also, select the data in the tables associated to other objects, filtering by the foreign key (very fast) .
   5. Insert into the temporary table the selected data.

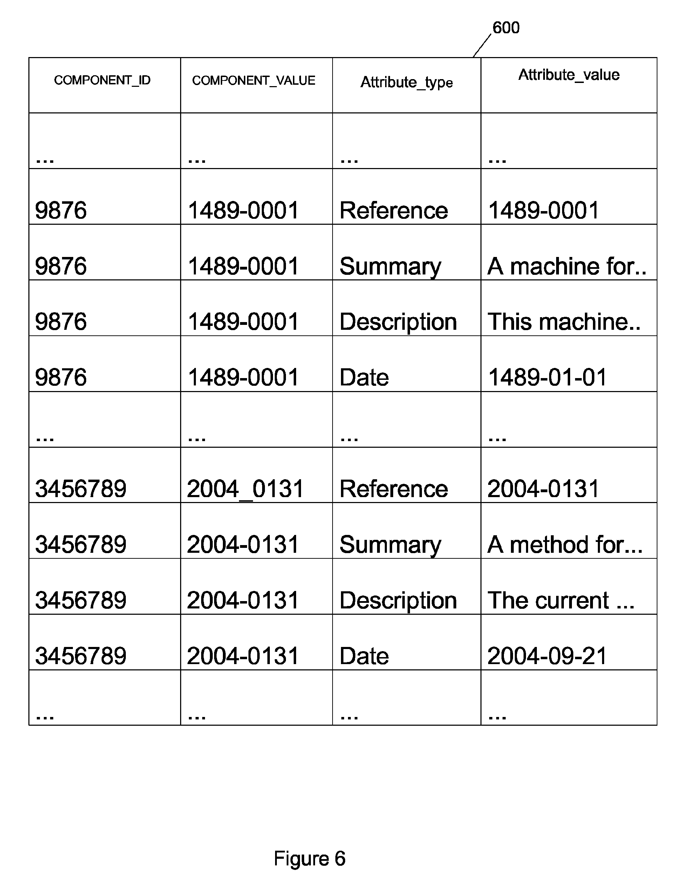

   Fig. 6 illustrates a vertical indexed temporary table according to the preferred embodiment. It refers to the example described here above (type of data warehouse: general purpose DW, object: component, information type (metadata): invention). The table is based on the example of the general purpose DW database as described in reference to Fig. 4. The component and attribute table of the general purpose DW database are selected. We select 'invention' in the component table. The indirect key is 9876. There is one other row of 'invention' not shown in the component table of Fig. 4 , with the component id of 3456789. Then, the vertical table is filled with the information read in the vertical temporary table (600) indexed by the 4-uples, (Component id - Component Value - Attribute Type - Attribute Value).
   If the next step of the method for performing the existence query and inserting or modifying (see later in the document step [4] description) is executed on this vertical table, the performance improvement is already measurable (for the insert of new 56.000 entries from the production database with vertical temporary table the time is 3 hours) compared to the execution of insertion/modification directly on the general purpose DW database tables (for the insert of new 1000 entries from the production database without a temporary table the time is 1h with the same computing environment).
   In the preferred embodiment the vertical tables are modified once again to improved the performance. By adding in the method the vertical to horizontal table transforming step described in the following paragraph II, the performance for existence query may still be improved (for the insert of new 56.000 entries from the production database with horizontal temporary table the time is 1 hour wit the same computing environment) .
[3] Transform the "vertical" temporary table into the final "horizontal" temporary table. It is noted that this transforming is only useful if the number of attributes associated to the component is greater than one.
   The horizontal temporary table can have the following structure for checking the existence of a component with N attributes:
   Component id - Component Value - Attribute1 Value - Attribute2 Value - ... - AttributeN Value.

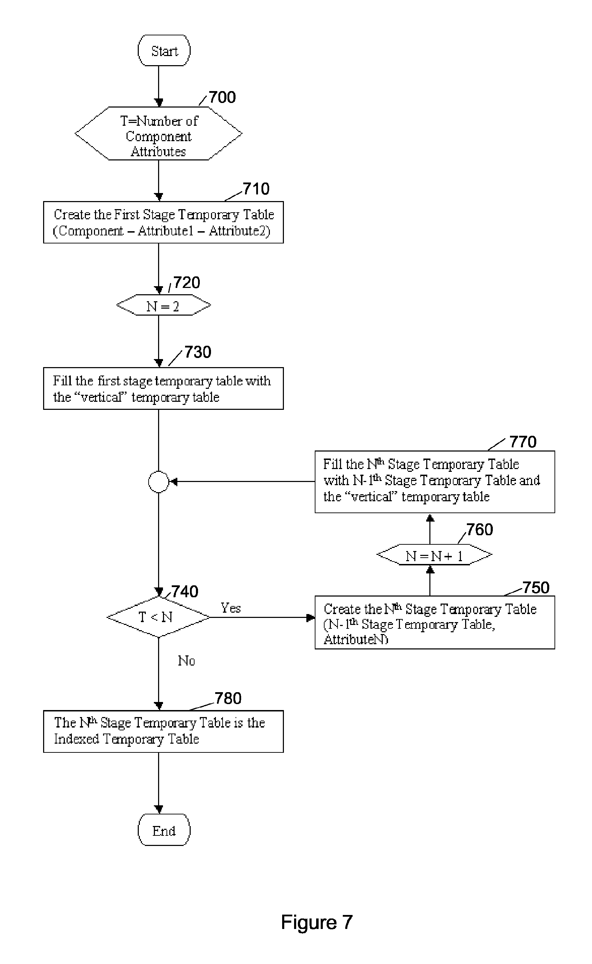

   One example of method to transform the "vertical" temporary table in the final "horizontal" indexed temporary table is illustrated in the flowchart of Fig. 7:
   1. Knowing that the total of attributes is T (700), creating (710) a first stage temporary table: the structure of this table is Component - Attribute1 value - Attribute2 value.
   2. Starting with a number of attributes of two (720) in the first stage temporary table, fill this table (730) with the combined data from the "vertical" temporary table. The query for retrieving the data has a join of the "vertical" table, filtered by Attribute1, with itself, filtered by Attribute2, on the component id.
   3. Create the second stage temporary table (750): the structure of this table is Component - Attribute1 value - Attribute2 value - Attribute3 value.
   4. Increment with one the number of attributes of the component (760), fill this table (770) with the data combined from the first stage temporary table and the "vertical" temporary table. The query for retrieving the data has a join of the first stage temporary table with the "vertical" table, filtered by Attribute3, on the component.
   5. If the number of attributes of the component is lesser than N (result of test 740 is yes), repeat the steps 3 and 4 until the N-1 stage temporary table is created. This last stage (N-1) table with the data of the component and all the attributes (result of test 740 is no) is the horizontal and final indexed temporary table according to the preferred embodiment.

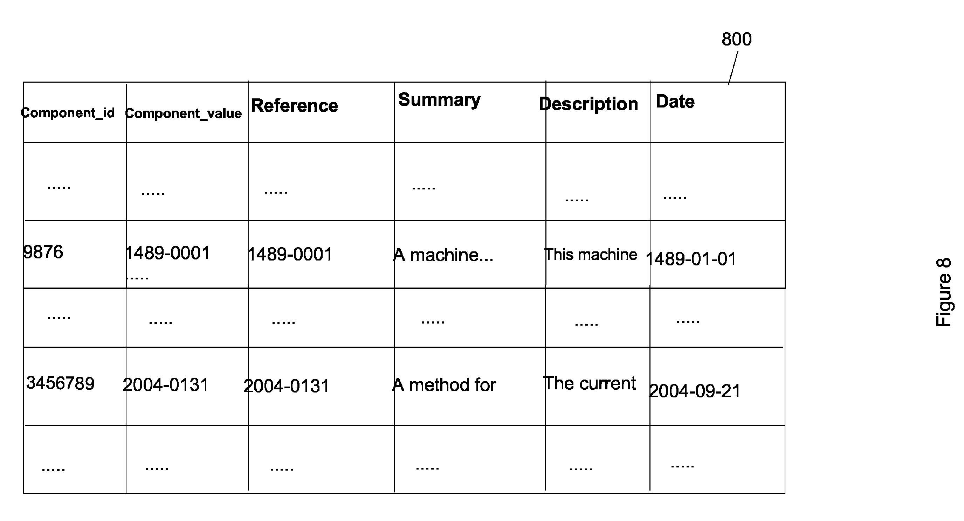

   Fig. 8 illustrates a horizontal temporary table according to the preferred embodiment. The table is based on the example of the general purpose DW database as described in reference to Fig. 4. In Fig.8, the temporary table (800) contains one row for the component id 9876 which concentrate the information which was spread on four rows in the vertical database of Fig. 6. A existence query on a 6-uple (9876, '1489-0001', '1489-0001', 'A machine....', 'This machine....', '1489-01-01') is quicker than the existence query done on the vertical table of Fig. 6 and much quicker than the existence query done on component and attribute joined tables of the general purpose DW database tables of Fig. 4.
   The horizontal indexed temporary table has the following characteristics:
   The structure of this table depends on the type of information that is checked and on the schema of the central database. A person skilled in the art can easily make this step automated. In fact, an object is identified by a combination of the values and the metadata:
   For the component object the information is needed from all Component and its Attributes.
   For the attribute object the information is needed from all Attributes and the associated Components.
   For the relation object the information is needed from all Relations and associated Component, with its Attributes.
   For the measurement object the information is needed from all Measurements and associated Component, with its Attributes.

   So, the creation the temporary table is done following these five characteristics:
   1. The temporary table must be built with the columns, which uniquely identify the object of the information type that is checked. So
      For components, some columns of component and attribute are needed
      For attributes, some columns of attribute and component are needed
      For relations, some columns of relation, component and attributes associated to the component are needed
      For measurements, some columns of measurement, component and attribute associated to the component are needed
   2. The number and the type of columns of objects strictly depends on the structure of the schema of the general-purpose DW database.
   3. The fields of the temporary table contain only values.
   4. The indexes are on all fields of the temporary table.
   5. The field name of attribute value is the related metadata.

   This temporary table is filled with the information of the central database filtered by metadata. So, this temporary table is indexed and very light. It contains only the information that concerns the component to insert. Each row of this "horizontal" table is identified by the component and each row contains the information of the component and all related attributes.
[4] The following step of the method to insert/modify data in the general purpose DW database, consists in performing the existence queries on the temporary table and insert the information if it has not been found. For all information, the existence query is performed on the indexed horizontal temporary table in the preferred embodiment. It is possible also to perform the existence query on the indexed vertical temporary table, this will improve performance versus having an existence query in the central database, but, with a lower result than with the Horizontal tables.
   It is noted that the insertion is done very easily a primary key (component_id in the example) being assigned automatically in the general purpose DW database object table (component table). When a modification has to be performed, the foreign key (component_id) in the temporary table is used as primary key to first point to the right row in the general purpose DW database object table (component table). Then ,the corresponding field is updated according to the information collected in the production data base.
   For insertions, if this information is not discovered, insert the information into the central database tables; otherwise no data is inserted in the central database.
   For modifications, if this information is discovered, the data are modified into the central database tables; otherwise no actions are performed.
[5] The last step consists in dropping the temporary table.

It is noted that a temporary table is created for each object to be checked in an ETL operation to be performed. More precisely, in an ETL operation to be performed, there may be more than one metadata to be updated in the general purpose DW database. For instance, the record collected from the production database (such as the one illustrated in reference to Fig. 5), contains more than one object to be checked: Leonardo da Vinci is for the object Inventor and 149-0001 is for the object Invention. In the general purpose database (such as the one illustrated in reference to Fig. 4), there will be a temporary table to be built for the metadata 'Inventor' and one temporary table to be built for the metadata 'Invention' . For each metadata, there will be one temporary table to be built, one checking for existence and one update operation to be done.

The method can be used as a programming tool to create the ETL scripts for extracting, transforming and loading information from the production databases to the Central general purpose DW database.

## Claims

1. A method for loading information from a production database into a general purpose DW database comprising at least one table for each type of object defined in its schema, said method comprising the steps of:
- collecting information to be loaded from the production database;
- identifying in the collected information one object to be checked having at least one object table and its corresponding metadata in the general purpose DW database;
- selecting the rows in the at least one table of the object to be checked of the general purpose DW database containing the metadata of the object to be checked;
- reading the primary keys of the selected rows;
- selecting in the at least one associated object table of the general purpose DW database tables, the rows containing the primary keys as the foreign keys;
- creating an indexed temporary table wherein each row comprises pairs of data, the first pair being (primary key, metadata value) read in the selected at least one object table, the other pairs (associated object metadata, metadata value) read in selected at least one associated object table;
- checking in the temporary indexed table if the collected information already exists and reading the primary key;
- performing the loading of information in the general purpose DW database tables according to the result of the checking step and using the primary key in the general purpose DW tables.

2. The method of claim 1 further comprising:
if the checking of the temporary indexed table is negative and the loading is for insertion, creating a new primary key and new rows using it in the general purpose DW database at least one table of the checked object and the associated objects; and,
if the checking of the temporary indexed table is positive and the loading is for modification, searching the rows and modifying them in the general purpose DW database at least one table of the checked object and the associated objects using the primary key of the temporary table.

3. The method of anyone of claims 1 to 2 further comprising, before performing the checking step:
transforming the temporary table into one second temporary table wherein each row includes the first pair of data, (primary key, metadata value), of the temporary table followed by the successive associated object metadata values found in the rows of the temporary table having the same primary key; and,
replacing the temporary table by the second temporary table.

4. The method of claim 1 or 3 further comprising:
removing the temporary table.

5. The method of anyone of claim 1 to 4 wherein the object to be checked is a component and the associated objects are component attributes.

6. The method of anyone of claim 1 to 4 wherein the object to be checked is an attribute and the associated objects are components.

7. The method of anyone of claim 1 to 4 wherein the object to be checked is a relation and the associated objects are components and attributes associated to the components.

8. The method of anyone of claim 1 to 4 wherein the object to be checked is a measurement and the associated objects are component and attributes associated to components.

9. The method of anyone of claims 1 to 8 further comprising:
identifying if one other object is to be checked in the collected information and its corresponding metadata in the general purpose DW database, and, if one other object is found, repeating the steps of the method, starting from the first selecting step, for this other object; and,
repeating the previous step for all the objects to be checked identified in the collected information.

10. A computer program product comprising programming code instructions for executing the steps of the method according to anyone of claims 1 to 9 when said program is executed on a computer.

11. A data processing system comprising means adapted for carrying out the method according to anyone of claims 1 to 9.
